# EUROPEAN PATENT APPLICATION

(11) **EP 1 936 914 A1**
(43) Date of publication of application: **25.06.2008**
(21) Application number: 07024670.7
(22) Date of filing: 19.12.2007
(51) Int. Cl.: H04L 29/06, H04L 1/18

(54) **Method and apparatus for recovering protocol error in a wireless communications system**

(30) Priority: 19.12.2006 US 875539 P
(71) Applicant: Innovative Sonic Limited, Tortola (VG)
(72) Inventor: Jiang, Sam Shiaw-Shiang, Taipei City Taiwan (TW)
(74) Representative: Weber, Joachim

(57) **Abstract**

A method for recovering a protocol error in a receiver of a wireless communications system includes receiving a packet including a compressed and ciphered header (402), performing a deciphering procedure on the header according to at least a deciphering parameter to get a deciphered result (404), performing a decompression procedure on the deciphered result according to a decompression algorithm to get a decompression result (406), performing a check procedure on the decompression result to determine whether the deciphering parameter is correct (408), and recovering the protocol error when a result of the check procedure indicates that the deciphering parameter is not correct (410).

## Description

This application claims the benefit of U.S. Provisional Application No. 60/875,539, filed on Dec 19, 2006 and entitled "A scheme of header compression and ciphering in PDCP layer", the contents of which are incorporated herein by reference.

The present invention relates to a method and apparatus for recovering protocol error in a wireless communications system according to the pre-characterizing clauses of claims 1 and 10.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

This in mind, the present invention aims at providing a method and apparatus for recovering protocol error in a wireless communications system, for timely recovering the protocol error, preventing unnecessary packet discard, and enhancing transmission efficiency.

This is achieved by a method and apparatus for recovering protocol error in a wireless communications system according to claims 1 and 10. The dependent claims pertain to corresponding further developments and improvements.

As will be seen more clearly from the detailed description following below, the claimed method for recovering a protocol error in a receiver of a wireless communications system comprises receiving a packet comprising a compressed and ciphered header, performing a deciphering procedure on the header according to at least a deciphering parameter to get a deciphered result, performing a decompression procedure on the deciphered result according to a decompression algorithm to get a decompression result, performing a check procedure on the decompression result to determine whether the deciphering parameter is correct, and recovering the protocol error when a result of the check procedure indicates that the deciphering parameter is not correct.

In the following, the invention is further illustrated by way of example, taking reference to the accompanying drawings. Thereof
Fig. 1 is a schematic diagram of the prior art procedure of ciphering and header compression in the PDCP layer of the transmitter.
Fig. 2 is a function block diagram of a wireless communications device.
Fig. 3 is a diagram of program code of Fig. 2.
Fig. 4 is a flowchart of a process according to an embodiment of the present invention.

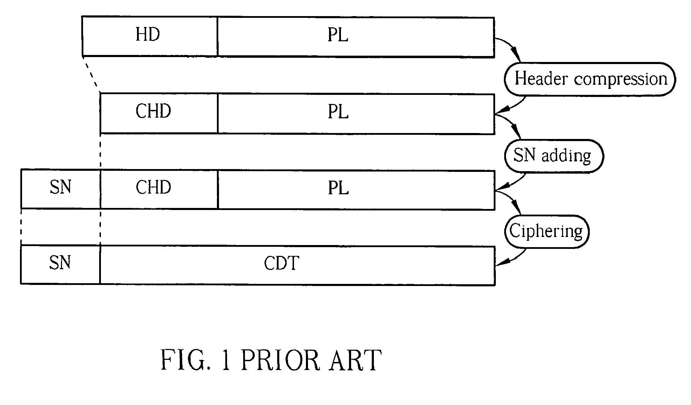

In the LTE system, a Packet Data Convergence Protocol (PDCP) layer performs ciphering and deciphering on packets. Besides, the PDCP layer can use a header de-/compressing technique, such as ROHC (Robust Header Compression) algorithm, to de-/compress packet headers. Please refer to Fig. 1, which illustrates a schematic diagram of operations of ciphering and header compression in the PDCP layer of the LTE system according to the prior art. In Fig. 1, HD represents a header of a packet, PL represents payload of the packet, CHD represents a compressed header, SN represents a PDCP sequence number, and CDT represents ciphered data. After receiving a Service Data Unit (SDU) from the upper layer, the PDCP layer divides HD and PL. Then, the PDCP layer uses the header compressing technique to compress HD into CHD. Note that, the header compressing technique is only performed on HD, and does not change the contents of PL. After the header compressing technique is complete, the PDCP layer adds SN, and performs ciphering on CHD and PL to get CDT. The combination of SN and CDT is the PDCP PDU (Protocol Data Unit) and is outputted to the lower layer. In other words, SN is not ciphered and is transmitted in plain text to the receiver.

Fig. 1 illustrates a schematic diagram of the prior art procedure of ciphering and header compression in the PDCP layer of the transmitter. In the receiver, the PDCP layer performs deciphering and header decompression on the received packets according to a reverse procedure of Fig. 1. That is, the PDCP layer of the receiver performs deciphering on the received packets and then performs header decompression on the deciphered packets to get the original data. After header decompression is complete, the receiver performs Cyclic Redundancy Check (CRC) on the header of the decompressed header to check data accuracy. If the decompressed header passes CRC, the receiver continues to perform follow-up operations. Oppositely, if the decompressed header fails in CRC, the receiver discards the corresponding packet.

In the PDCP layer, ciphering is utilized for protecting user data and signaling information from being intercepted by unauthorized devices. Generally, in the prior art ciphering method, the transmitter generates keystream data via a specified algorithm based on ciphering key (CK), ciphering sequence number (SN), and other parameters or variables, and encrypts plain-text data with the keystream data to generate cipher-text data. The receiver can decipher the cipher-text data by inverse operations. The ciphering SN is composed of a Hyper Frame Number (HFN), maintained in both the transmitter and the receiver, and a SN, embedded in a header of a packet. HFN is similar to a carrying number of SN. Each time SN wraps around its maximum representing value back to 0, HFN is incremented by one in the transmitter and in the receiver. For example, if SN is represented by 7 bits, which counts from 0 to 127, once SN is beyond 127, HFN is incremented by 1, and SN restarts from 0. As a result, according to SN, the sender and the receiver can timely increment HFN, so as to keep synchronization of HFN and maintain ciphering and deciphering processes.

Since HFN is similar to a carrying number of SN, HFN may get out of synchronization due to protocol error, out of sequence transmission or transmission data loss, leading to deciphering failure. When deciphering failure occurs, the decompression result of the header is wrong and cannot pass CRC, causing discard of the corresponding packet. However, the prior art does not specify how to detect and recover HFN out of synchronization, and affects transmission efficiency.

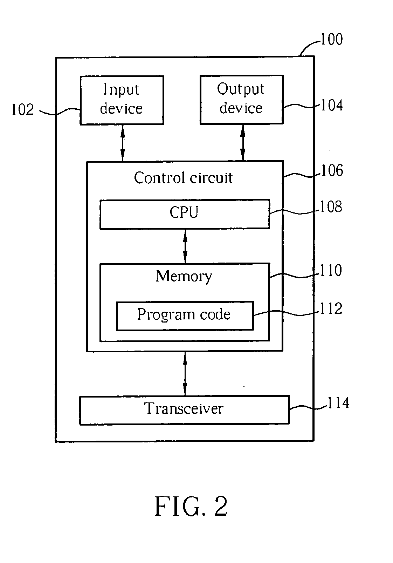

Please refer to Fig. 2, which is a functional block diagram of a communications device 100 in a wireless communications system. The wireless communications system is preferably the LTE system. For the sake of brevity, Fig. 2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

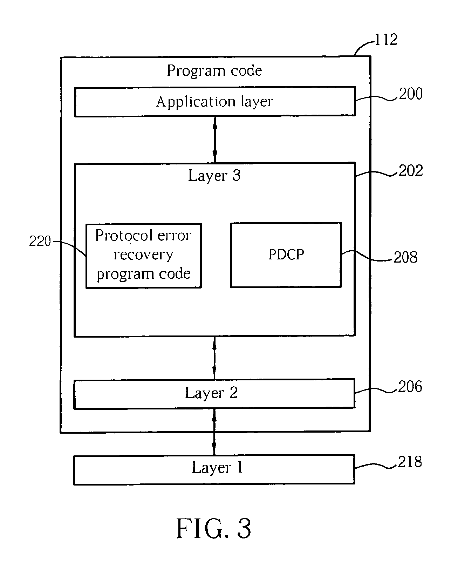

Please continue to refer to Fig. 3. Fig. 3 is a diagram of the program code 112 shown in Fig. 2. The program code 112 includes an application layer 200, a Layer 3 202, and a Layer 2 206, and is coupled to a Layer 1 218. The Layer 3 202 comprises a PDCP layer 208. The Layer 2 206 comprises an RLC layer and a MAC layer, and performs link control. The Layer 1 218 performs physical connections. Note that, although the PDCP layer 208 is contained in the block of Layer 3 202 in Fig. 2, it could also be seen as contained in the block of Layer 2 206. Whether the PDCP layer 208 is considered to belong to Layer 2 or Layer 3 is not relevant to this invention.

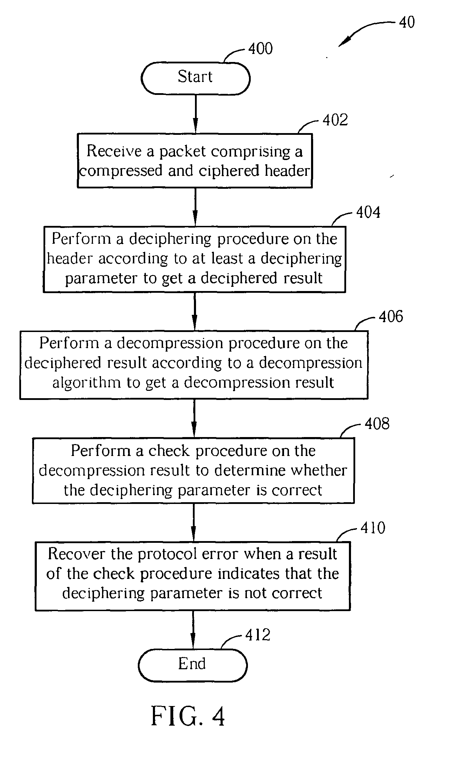

The PDCP layer 208 can perform de-/ciphering and de-/compression on packets, in order to enhance information security and utility rate of radio resources. In such a situation, the embodiment of the present invention provides a protocol error recovery program code 220, to accurately recover a protocol error. Please refer to Fig. 4, which illustrates a schematic diagram of a process 40 according to an embodiment of the present invention. The process 40 is utilized for recovering a protocol error in a receiver of a wireless communications system, and can be compiled into the protocol error recovery program code 220. The process 40 comprises the following steps:
Step 400: Start.
Step 402: Receive a packet comprising a compressed and ciphered header.
Step 404: Perform a deciphering procedure on the header according to at least a deciphering parameter to get a deciphered result.
Step 406: Perform a decompression procedure on the deciphered result according to a decompression algorithm to get a decompression result.
Step 408: Perform a check procedure on the decompression result to determine whether the deciphering parameter is correct.
Step 410: Recover the protocol error when a result of the check procedure indicates that the deciphering parameter is not correct.
Step 412: End.

According to the process 40, after receiving a packet, the PDCP layer of the receiver performs deciphering on the header of the packet, and performs decompression on the packet. Then, the embodiment of the present invention performs the check procedure on the decompression result to determine whether the deciphering parameter used in the deciphering procedure is correct, and recovers the protocol error when the deciphering parameter is not correct. In other words, the embodiment of the present invention can recover the protocol error when the decompression result of the header fails in the check procedure.

Preferably, the embodiment of the present invention can perform CRC on the decompression result of the header, or check if a field of the decompression result comprises a value that is not allowed in the field, so as to determine whether the deciphering parameter is correct. The decompression algorithm is preferably corresponding to ROHC. In addition, the deciphering parameter is preferably HFN, so that the receiver can trigger an HFN synchronization procedure to recover HFN synchronization, e.g. triggering a reset procedure or asking the transmitter to send a message indicating the correct HFN value.

Moreover, after the protocol error is covered, the embodiment of the present invention preferably performs the deciphering procedure on the header again, to get the correct packet data. As a result, packet discard due to failure of header decompression can be avoided. Therefore, the embodiment of the present invention can effectively detect HFN out of synchronization in a wireless communications system, to timely recover the protocol error, prevent unnecessary packet discard, and enhance transmission efficiency.

In summary, the embodiment of the present invention performs deciphering and decompression on the packet header, and determines whether the deciphering parameter is correct according to the decompression result, so as to timely recover the protocol error, prevent unnecessary packet discard, and enhance transmission efficiency.

## Claims

1. A method for recovering a protocol error in a receiver of a wireless communications system comprising:
receiving a packet comprising a compressed and ciphered header (402); performing a deciphering procedure on the header according to at least a deciphering parameter to get a deciphered result (404); and
performing a decompression procedure on the deciphered result according to a decompression algorithm to get a decompression result (406);
**characterized by** performing a check procedure on the decompression result to determine whether the deciphering parameter is correct (408); and
recovering the protocol error when a result of the check procedure indicates that the deciphering parameter is not correct (410).

2. The method of claim 1, **characterized in that** performing the check procedure on the decompression result to determine whether the deciphering parameter is correct is performing a Cyclic Redundancy Check operation on the decompression result to determine whether the deciphering parameter is correct.

3. The method of claim 1, **characterized in that** performing the check procedure on the decompression result to determine whether the deciphering parameter is correct is checking if a field of the decompression result comprises a value that is not allowed in the field to determine whether the deciphering parameter is correct.

4. The method of claim 1, **characterized in that** the deciphering parameter is a Hyper Frame Number (HFN).

5. The method of claim 4, **characterized in that** recovering the protocol error when the result of the check procedure indicates that the deciphering parameter is not correct is triggering an HFN synchronization procedure when the result of the check procedure indicates that the deciphering parameter is not correct to recover the protocol error.

6. The method of claim 5, **characterized in that** the HFN synchronization procedure is a reset procedure.

7. The method of claim 5, **characterized in that** triggering the HFN synchronization procedure is asking a transmitter to send a message indicating a correct HFN value.

8. The method of claim 1, **characterized in that** the decompression algorithm is corresponding to a Robust Header Compression technique.

9. The method of claim 1 further comprising performing the deciphering procedure on the header again according to a deciphering parameter after the protocol error is recovered.

10. A communications device (100) for accurately recovering a protocol error in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
receiving a packet comprising a compressed and ciphered header (402);
performing a deciphering procedure on the header according to at least a deciphering parameter to get a deciphered result (404); and
performing a decompression procedure on the deciphered result according to a decompression algorithm to get a decompression result (406);
and is **characterized by** comprising:
performing a check procedure on the decompression result to determine whether the deciphering parameter is correct (408); and
recovering the protocol error when a result of the check procedure indicates that the deciphering parameter is not correct (410).

11. The communications device of claim 10, **characterized in that** performing the check procedure on the decompression result to determine whether the deciphering parameter is correct is performing a Cyclic Redundancy Check operation on the decompression result to determine whether the deciphering parameter is correct.

12. The communications device of claim 10, **characterized in that** performing the check procedure on the decompression result to determine whether the deciphering parameter is correct is checking if a field of the decompression result comprises a value that is not allowed in the field to determine whether the deciphering parameter is correct.

13. The communications device of claim 10, **characterized in that** the deciphering parameter is a Hyper Frame Number (HFN).

14. The communications device of claim 13, **characterized in that** recovering the protocol error when the result of the check procedure indicates that the deciphering parameter is not correct is triggering an HFN synchronization procedure when the result of the check procedure indicates that the deciphering parameter is not correct to recover the protocol error.

15. The communications device of claim 14, **characterized in that** the HFN synchronization procedure is a reset procedure.

16. The communications device of claim 14, **characterized in that** triggering the HFN synchronization procedure is asking a transmitter to send a message indicating a correct HFN value.

17. The communications device of claim 10, **characterized in that** the decompression algorithm is corresponding to a Robust Header Compression technique.

18. The communications device of claim 10, **characterized in that** the program code further comprises performing the deciphering procedure on the header again according to a deciphering parameter after the protocol error is recovered.
